(19) Europäisches Patentamt
European Patent Office
Office européen des brevets

(11) **EP 0 981 060 A2**

(12) **EUROPÄISCHE PATENTANMELDUNG**

(43) Veröffentlichungstag:
23.02.2000 Patentblatt 2000/08

(51) Int. Cl.⁷: **G01V 3/06**

(21) Anmeldenummer: **99116124.1**

(22) Anmeldetag: **18.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.08.1998 DE 19837828**

(71) Anmelder:
**FORSCHUNGSZENTRUM JÜLICH GMBH**
**52425 Jülich (DE)**

(72) Erfinder:
- **Jaekel, Uwe Dr.**
  **52445 Titz (DE)**
- **Hasgagen, Uwe**
  **52066 Aache (DE)**
- **Vereecken, Harry**
  **52428 Jülich (DE)**
- **Blick, Marcel**
  **52066 Aachen (DE)**

(74) Vertreter: **Cohausz & Florack**
**Patentanwälte**
**Kanzlerstrasse 8a**
**40472 Düsseldorf (DE)**

(54) **Verfahren und Vorrichtung zur oberflächennahen Detektion von Stromdichteverteilungen in einem Untergrund**

(57)    Die Erfindung betrifft ein Verfahren sowie eine Vorrichtung zur oberflächennahen Detektion von Stromdichteverteilungen in einem Untergrund, bei dem das in dem Untergrund verfahrensgemäß erzeugte Magnetfeld gemessen und daraus die Stromdichteverteilung im Untergrund bestimmt wird. Der Erfindung liegt das technische Problem zugrunde, ein neues, nicht invasives Verfahren und eine entsprechende Vorrichtung anzugeben, die eine Bestimmung der Stromdichteverteilung mit größerer Genauigkeit ermöglichen. Erfindungsgemäß wird bei dem Verfahren im Untergrund direkt ein Wechselstrom erzeugt, dessen Magnetfeld vermessen wird. Dazu ist eine erfindungsgemäße Vorrichtung vorgesehen.

Fig. 1

**Beschreibung**

Die Erfindung betrifft ein Verfahren sowie eine Vorrichtung zur oberflächennahen Detektion von Stromdichteverteilungen in einem Untergrund, bei dem das in dem Untergrund verfahrensgemäß erzeugte Magnetfeld gemessen wird und daraus die Stromdichteverteilung im Untergrund bestimmt wird.

Für das Verständnis aller wesentlichen Fragen im Zusammenhang mit Böden und Grundwasserleitern ist die Kenntnis der räumlichen Struktur des Untergrundes von entscheidender Bedeutung. Diese Kenntnis wurde bisher vor allem durch invasive Verfahren, im wesentlichen durch Bohrungen, gewonnen. Diese Verfahren haben neben der Tatsache, daß sie invasiv sind und die Verhältnisse im Untergrund verändern können, den Nachteil, daß sie die räumliche Struktur nur punktuell an den Bohrungen wiedergeben. Die wichtigen Zusammenhänge und Verbindungen bleiben dabei unentdeckt, die jedoch für eine Gefährdungsabschätzung, Vorhersage und Beobachtung von Transportvorgängen im Untergrund notwendig sind.

In jüngerer Zeit wurden zunehmend geophysikalische Methoden eingesetzt, die im wesentlichen nicht invasiv den Boden durchmustern. Hierbei liegen die Schwächen der Verfahren in der meist zu geringen räumlichen Auflösung, dem unklaren Zusammenhang der gemessenen physikalischen Größe mit dem eigentlichen interessierenden geologischen Parameter und der nicht eindeutigen Rückrechnung der mit den Sensoren aufgenommenen Meßwerte auf die zugrundeliegenden Verhältnisse im Untergrund.

Ein solches, aus dem Stand der Technik bekanntes Verfahren wird als Geoelektrik bezeichnet, bei dem über mindestens zwei Elektroden ein Gleichstrom in den Untergrund im Untersuchungsbereich eingeleitet wird. Mit Elektroden und daran angeschlossenen Spannungsmeßgeräten wird dann die resultierende elektrische Potentialverteilung an der Untergrundoberfläche untersucht, woraus die elektrische Feldverteilung im Untergrund bestimmt wird.

Bei einem weiteren aus dem Stand der Technik bekannten Verfahren, das als Controlled Source Audio Magnetotelluric (CSAMT) bekannt ist, werden ein oder mehrere elektrische Dipole an den Boden angelegt und im Frequenzbereich von 1 Hz bis 8 kHz betrieben. In einer großen Entfernung (Größenordnung etwa einige Kilometer) werden eine magnetische und eine elektrische Komponente der abgestrahlten elektromagnetischen Welle gemessen. Die vergleichsweise große Entfernung des Detektors ist erforderlich, um die abgestrahlte elektromagnetische Welle mathematisch mit der Fernfeldnäherung beschreiben zu können. Daher werden mit dem genannten Verfahren geologische Strukturen in einer großen Tiefe und Ausdehnung gemessen.

Weiterhin ist aus dem Stand der Technik ein induktives Verfahren der Geoelektromagnetik bekannt, bei dem die Anregung des Untergrundes mit Spulen an der Erdoberfläche oder mittels entfernter Sender bewirkt wird, indem im Untergrund als Reaktion auf das äußere Magnetfeld im Untergrund ein Magnetfeld induziert wird. Nachteilig bei diesem Verfahren ist, daß die Feldabschwächung mit steigendem Abstand in doppelter Weise auftritt, nämlich einmal bei der Anregung des Untergrundes und dann bei der Messung durch den Meßsensor.

Der vorliegenden Erfindung liegt daher das technische Problem zugrunde, ein neues, nicht invasives Verfahren und eine entsprechende Vorrichtung zur oberflächennahen Detektion von Stromdichteverteilungen in einem Untergrund anzugeben, wobei mit größerer Genauigkeit die Stromdichteverteilung im Untergrund bestimmt werden kann.

Das zuvor aufgezeigte technische Problem wird erfindungsgemäß durch ein Verfahren mit den Merkmalen des Anspruches 1 gelöst.

Gemäß dieses Verfahrens werden an dem Untersuchungsbereich Elektroden mit dem Untergrund in Kontakt gebracht, durch die im Untersuchungsbereich ein elektrischer Wechselstrom hervorgerufen wird. Dazu wird über elektrische Zuleitungen eine elektrische Wechselspannung an den Elektroden angelegt. Durch unterschiedliche Leitfähigkeiten in dem Untersuchungsbereich bildet sich eine entsprechende Stromdichteverteilung im Untersuchungsbereich aus. Durch die Stromdichteverteilung wird ein Magnetfeld erzeugt, das mit Hilfe mindestens eines Magnetfeldsensors an einer Mehrzahl von Orten gemessen wird. Die gemessene Magnetfeldstärkeverteilung wird dann mittels einer inversen Faltung mit dem Gesetz von Biot-Savat in eine Stromdichteverteilung umgerechnet.

In weiter bevorzugter Weise wird aus der Stromdichteverteilung die Leitfähigkeitsverteilung im Untergrund berechnet. Dabei stellt die berechnete Leitfähigkeitsverteilung im Untergrund eine weitere Zielgröße des Verfahrens dar, und die Interpretation der elektrischen Leitfähigkeitsverteilung im untersuchten Untergrund kann dann abhängig von der jeweiligen Fragestellung in Bezug auf die hydraulische Leitfähigkeit, die Wassersättigung oder die bevorzugten Fließwege abgeleitet werden.

Die zuvor erwähnte inverse Faltung ist bei einem Problem, das aufgrund der physikalischen Gegebenheiten als zweidimensional anzusehen ist, eindeutig möglich. Für die Inversion gibt es dabei eine Vielzahl von Möglichkeiten, beispielsweise auf der Basis von Finite-Elemente- oder Finite-Differenzenmethoden, Fourieanalyse oder neuronalen Netzen. Dagegen ist eine eindeutige dreidimensionale Inversion bisher nicht gelungen, jedoch werden aufgrund des erfindungsgemäßen Verfahrens Daten erzeugt, die eine merkliche Verbesserung der Situation gegenüber dem Stand der Technik herbeiführen, so daß die Anzahl der für eine dreidimensionale Inversion notwendigen sinnvollen Annahmen über die Stromverteilung im Untergrund verringert werden kann.

Mit dem zuvor erläuterten Verfahren lassen sich einerseits geologische und andererseits nicht geologische Untergründe untersuchen. Als nicht geologische Untersuchungen können beispielsweise Werkstoffprüfungen zur Bestimmung von Rissen oder Oxidationsschäden in Metallen genannt werden.

In einer ersten Ausgestaltung der vorliegenden Erfindung wird bei der Berechnung der Leitfähigkeitsverteilung aus der berechneten Stromdichteverteilung eine angenommene Verteilung des elektrischen Feldes im Untergrund angenommen. Dieses ist beispielsweise dann sinnvoll und möglich, wenn zwei flächige, plattenförmige Elektroden im Untergrund angeordnet sind, zwischen denen sich eine nahezu homogene Potentialverteilung ausbildet. Daher kann in einem solchen Anwendungsfall eine elektrische Potentialverteilung wie bei einem Plattenkondensator in guter Näherung angenommen werden.

Bei weniger eindeutigen Potentialverteilungen kann das zuvor beschriebene Verfahren dadurch unterstützt werden, daß während der Messung der Magnetfeldstärkeverteilung gleichzeitig die elektrische Potentialverteilung an der Oberfläche des Untergrundes gemessen wird. Somit können die gemessenen elektrischen Potentiale in die näherungsweise Bestimmung der elektrischen Potentialverteilung mit berücksichtigt werden.

Bei einer bevorzugten Ausgestaltung der vorliegenden Erfindung kann mit Hilfe einer Mehrelektrodenanordnung die räumliche Abhängigkeit der Leitfähigkeitsverteilung alleine durch mehrere Messungen der Stromdichteverteilungen für zwei unabhängige Fließrichtungen des Wechselstromes, also ohne Messung oder Annahme bezüglich der Potentiale oder der elektrischen Felder, bestimmt werden. Wegen der kleinen Frequenzen der Wechselspannung gilt näherungsweise das Ohmsche Gesetz

$$j = \sigma E,$$

wobei j der Stromdichtevektor, $\sigma$ die (ortsabhängige) Leitfähigkeit und E der Vektor des elektrischen Feldes ist. Das elektrische Feld ist der Gradient des elektrischen Potentials $\Phi$, also $E = -\nabla\Phi$, folglich verschwindet seine Rotation und es gilt:

$$0 = \nabla \times E$$
$$= \nabla \times (1/\sigma \; j)$$
$$= \nabla(1/\sigma) \times j + 1/\sigma \; (\nabla \times j)$$

Damit ergibt sich die Vektor-Gleichung:

$$\nabla \times j + (\sigma \nabla \; 1/\sigma) \times j = 0$$

Nach einer Messung der Stromdichteverteilung sind j und $\nabla \times j$ bekannt, so daß die letzte Gleichung als bestimmende Gleichung für $1/\sigma$ angesehen werden

kann. Das System ist noch unterbestimmt, weil wegen des Kreuzprodukts keine Aussage für die Komponente von $\nabla (1/\sigma)$ parallel zum Stromdichtevektor gemacht werden kann. Mißt man aber (mindestens) zwei unabhängige Stromdichteverteilungen (z.B. durch Änderung der Elektrodenanordnung), so erhält man ein überbestimmtes Gleichungssystem, aus dem sich $\sigma$ absolut bestimmen läßt, wenn man die Leitfähigkeit an mindestens einer Stelle, beispielsweise an den Zuleitungen oder in einem wassergefüllten Hohlraum, kennt.

Für die Lösung des Gleichungssystems ist es günstig, wenn die beiden j-Felder annähernd senkrecht aufeinander stehen. Dies läßt sich z.B. durch eine Vierelektrodenanordnung erreichen, bei der die Verbindungslinien der in einer Messung verwendeten Elektrodenpaare senkrecht zueinander sind.

Die Methode läßt sich insbesondere dann einsetzen, wenn Potentialmessungen schwierig sind oder unzureichende Informationen liefern, z.B. wenn das zu unterscheidende Medium an der Oberfläche unzureichend elektrisch angekoppelt ist oder der zu untersuchende Bereich von einer sehr gut leitenden Schicht überdeckt ist.

Ein wesentlicher Vorteil des erfindungsgemäßen Verfahrens gegenüber dem Verfahren der obengenannten Geoelektrik besteht darin, dag das Magnetfeld nicht durch leitfähige Bereiche im Untergrund abgeschirmt wird, so daß auch Bereiche des Untergrundes unterhalb einer leitfähigen Schicht untersucht werden können. Denn das Magnetfeld wird allenfalls durch ferromagnetische Einlagerungen beeinflußt. Dieser Effekt kann jedoch - wie weiter unten erläutert wird - eliminiert werden. Weiterhin liegt der Vorteil gegenüber der Geoelektrik darin, daß die Magnetfeldstärkeverteilung vektoriell gemessen werden kann, während die Messung der Potentiale jeweils skalarer Meßwerte ergibt. Dadurch ist mit der Messung ein größerer Informationsgehalt verbunden, wodurch auch die Inversion der gemessenen Magnetfeldstärkeverteilung in eine Stromdichteverteilung detailreicher wird.

Gegenüber dem CSAMT-Verfahren, das oben beschrieben worden ist, liegt der Vorteil darin, daß in direkter Nähe zu dem Untersuchungsbereich das Magnetfeld vermessen wird, so daß der Untergrund erheblich detailhierter analysiert werden kann.

Gegenüber dem Verfahren der Geoelektromagnetik besteht der wesentliche Vorteil darin, daß der Strom mittels der Elektroden direkt in den Untergrund eingeleitet wird, ohne daß Spulen an der Untergrundoberfläche oder entfernte Sender verwendet werden. Dadurch wird eine größere Stromdichte im Untergrund erreicht, so daß das dadurch erzeugte Magnetfeld genauer gemessen werden kann.

In bevorzugter Weise wird die Magnetfeldstärke außerhalb des Untergrundes gemessen, wobei insbesondere die Magnetfeldstärke in verschiedenen Höhen oberhalb des Untergrundes gemessen wird. Dadurch besteht die Möglichkeit, die Veränderung des Magnetfeldes auch in vertikaler Richtung in verschiedenen Ebenen zu bestimmen, wodurch erneut die Dichte der aus der Messung abzuleitenden Informationen gesteigert wird. Insbesondere gegenüber der Geoelektrik ergibt sich eine erhebliche Verbesserung, da die Geoelektrik darauf beschränkt ist, die Feldverteilung an der Untergrundoberfläche zu untersuchen. Weiterhin ist es bei dem dargestellten Verfahren auch möglich, die Magnetfeldstärkeverteilung innerhalb des Untergrundes, vorzugsweise dabei in Bohrlöchern, gemessen wird. Andererseits besteht die Möglichkeit, bei Laboruntersuchungen, bei denen der Untergrund sich innerhalb eines allseits zugänglichen Behälters befindet, die Magnetfeldstärkeverteilung seitlich neben und/oder unterhalb der Laboranordnung zu messen.

Die größte Schwierigkeit bei der Messung von magnetischen Feldern im Freien ist das ständige Vorhandensein von Störfeldern. Die Herkunft der Störfelder läßt sich in der folgenden Weise gliedern:

- Das Erdmagnetfeld, das durch den Einfluß der Troposphäre (Sonnenwind) zeitlichen Variationen unterliegt.

- Ferromagnetische Strukturen im Boden, die das Erdmagnetfeld verzerren.

- Bewegte ferromagnetische Körper, die das Magnetfeld verzerren (z.B. vorbeifahrende Autos).

- Antropogene Magnetfelder, etwa durch elektrische Maschinen, Überlandleitungen, Radiowellen.

- Induktion in bewegten elektrisch leitenden Körpern.

Die Größe der Störfelder ist durchaus in der Größenordnung des zu messenden Signals aus dem Boden (einige nT), zum Teil, wie im Falle des Erdmagnetfeldes ($50\mu T$), sogar einige Größenordnungen größer.

Die bevorzugte Ausprägung des Verfahrens zur Kompensation dieser Störfelder liegt in der Verwendung von Lock-In-Technik. Der für die Untersuchung verwendete Strom wird mit einer festen Frequenz durch den Untersuchungsbereich geleitet. Die Messung des Magnetfeldes wird auf diese Frequenz eingeloggt, das heißt, es wird nur der Teil des Signals vermessen, der dieselbe Frequenz wie der Untersuchungsstrom aufweist. Auf diese Weise läßt sich das untersuchte Signal um einige Größenordnungen vom Untergrund abheben. Ein typischer Wert für die Seitenbandunterdrückung (Dämpfung des Signals bei halber/doppelter Frequenz) liegt bei 24 dB.

Man kann davon ausgehen, daß alle nicht durch den Untersuchungsstrom hervorgerufenen Magnetfelder durch diese Methode herausgefiltert werden.

Dabei kann die Lock-In-Technik zur Bestimmung von imaginären Leitfähigkeitsfeldern herangezogen werden. Denn durch die Variation der Frequenz des verwendeten Stromes können die kapazitiv und induktiv hervorgerufenen imaginären Leitfähigkeiten voneinander getrennt werden. Diese Trennung der imaginären Widerstände ermöglicht Aussagen über die Porenstruktur und die innere Oberfläche des Untergrundes. Der Effekt beruht dabei im wesentlichen auf Polarisation, einerseits für sehr gut leitende Inhomogenitäten durch die Polarisation des ionenleitenden Fluids und andererseits für schlecht leitende Bereiche durch die Polarisation der Körner. Durch die Polarisation wird ein elektrisches Feld aufgebaut, in dem Energie gespeichert ist, die dann zeitverzögert wieder abgegeben wird. Diese Zeitverzögerung läßt sich einerseits aus der Abklingkurve beim Abschalten bestimmen oder auch aus der Phasenverschiebung, wenn mit Wechselstrom gearbeitet wird. Letztendlich handelt es sich hierbei um den kapazitiven Widerstand als Teil des komplexen Widerstandes, für den ebenfalls die räumliche Verteilung bestimmt werden kann. Die Interpretation dieser Information erstreckt sich vor allem auf das Auffinden von Grenzflächen unterschiedlicher Art der elektrischen Leitfähigkeit (elektronisch, ionisch, durch Polarisation). Im Sinne geologischer oder transportrelevanter Parameter könnte man etwa auf Tone schließen, da besonders kleine Körner eine hohe Kapazität hervorrufen, analog zum Plattenkondensator, wo die Kapazität reziprok vom Abstand der Platten abhängt. Das Auftreten elektronischer Leitung in lokalisierten Bereichen, also das Vorhandensein von Metallen, oder auch das Auffinden schlecht leitender, polarisierbarer Flüssigkeiten ist ebenfalls möglich.

Die gemessene Magnetfeldstärkeverteilung kann allerdings nicht ausschließlich auf die Stromverteilung im Untersuchungsbereich im Untergrund zurückgeführt werden. Vor allem zwei Magnetfelder unterschiedlichen Ursprungs müssen bei der Auswertung der Meßergebnisse berücksichtigt werden. Zum einen wird durch den in den Zuleitungen in den Elektroden fließenden Strom ein Magnetfeld erzeugt, und zum anderen sind die sekundären magnetischen Antworten, im wesentlichen durch Ferromagnetika, auf das erzeugte Magnetfeld zu beachten.

Die aus der Geophysik schon länger bekannte Methode, durch induktive Anregung von Wirbelströmen im Untergrund die Verteilung der elektrischen Leitfähigkeit zu ermitteln, kann in vorteilhafter Weise mit dem vorliegenden Verfahren kombiniert werden, um weiterhin die Aussagefähigkeit der gemessenen Daten zu erhöhen. Denn die Aufnahme des Antwortsignals aus dem Untergrund kann mit dem gleichen Sensoraufbau wie bei dem zuvor beschriebenen Verfahren durchgeführt werden. Dadurch lassen sich die beiden Verfahren leicht kombinieren, indem lediglich beide Anregungsmöglichkeiten installiert werden. Die Reaktion des Untergrundes auf die verschiedenen Anregungen ist jeweils unterschiedlich, so daß durch die Kombination der Verfahren unabhängige Informationen gewonnen werden können.

Durch das induktive Verfahren werden lokale Wirbelströme im Untergrund induziert. Diese bilden magnetische Dipole mit kurzer Dipollänge (bezogen auf den Abstand der Sensoren). Für ein Dipolfeld fällt die Feldstärke mit der dritten Potenz in Abhängigkeit von der Entfernung ab.

Bei der Messung mit direkt eingelegtem Strom ist die Entfernung des Sensors mitunter kleiner als die Länge eines Stromfadens (bzw. in der gleichen Größenordnung). Man kann das magnetische Feld dann nahezu als zylindersymmetrisch ansehen. Dafür fällt die Feldstärke mit der ersten Potenz in Abhängigkeit von der Entfernung ab.

Wenn man also abwechselnd mit der beiden Anregungsmethoden mißt und sukzessive den vertikalen Abstand der Abtastung des Magnetfeldes ändert, läßt sich aus dem unterschiedlichen Intensitätsverlauf der Tiefenkontrast der Untersuchung verbessern.

Eine weitere Variation dieser Anordnung liegt darin, auch die anregende Induktionsspule in unterschiedlichen Höhen über dem Untersuchungsfeld anzubringen. Dabei ist einerseits ein Modus denkbar, bei dem die Abtastung entsprechend in der Höhe mitwandert oder aber unabhängig in verschiedenen oder einer konstanten Höhe durchgeführt wird.

Bei einer weiteren bevorzugten Ausgestaltung der vorliegenden Erfindung wird dem Untergrund in dem Untersuchungsbereich eine Flüssigkeit mit erhöhter elektrischer Leitfähigkeit, insbesondere eine Salzlösung, zugeführt, um deren Transport und Verdünnung zeitlich verfolgen zu können. Dieses geschieht vor allem im Hinblick auf den Stofftransport im Untergrund. In dieser Weise sollen bevorzugte Fließwege aufgespürt werden und ihre Bedeutung für den Transport in Böden und Grundwasserleitern untersucht werden.

Generell kann das Verfahren zur Untersuchung der räumlichen Struktur elektrischer Leitfähigkeiten von Objekten, die mit elektrischem Strom beaufschlagt werden können, eingesetzt werden.

- Ermittlung der Konzentration gelöster Substanzen in Böden und Grundwasserleitern aus der Leitfähigkeitsverteilung.

- Beobachtung chemischer Prozesse durch Messung der zeitlichen und räumlichen Variationen der Leitfähigkeitsverteilung (z.B. Fällungsreaktionen).

- Aufspüren und Untersuchen von elektrischen Anomalien (metallischer Körper, Erze, Leitungen, Blindgänger, archäologischer Objekte, ...).

- Erkundung und Monitoring bevorzugter Fließ- und Transportwege in porösen Medien (z.B. Böden, Aquifere, Kluftgesteine, Laboranordnungen).

- Verlagerung von Agrochemikalien.

- Unterstützung des Katastrophenmanagements bei Industrieunfällen.

- Gefährdungsabschätzung für Industriestandorte.

- Monitoring bei Labor- und Freilandversuchsfeldern zur Untersuchung von Transportvorgängen in porösen Medien.

- Bestimmung von Partikel- oder kolloidalen Transport.

- Aufspüren und Untersuchen von besonders schlecht leitenden Flüssigkeiten in Böden und Grundwasserleitern (durch die Verdrängung des Wasserfilms auf den Körnern), etwa:

  - Schadstofffahnen (Öle, PAKs)
  - Sanierung von Böden
  - Monitoring von Deponien auf Undichtigkeiten

- Monitoring von Deichen auf Durchweichung.

- Erkundung von wassertragenden oder wasserführenden Schichten in ariden oder semiariden Gebieten.

- Erkundung von Salz-Süßwasserfronten im Untergrund, in Flußsystemen oder in Agroökosystemen.

Das oben aufgezeigte technische Problem, wird erfindungsgemäß auch durch eine Vorrichtung nach Anspruch 16 zur Durchführung des Verfahrens zur oberflächennahen Detektion von Leitfähigkeitsverteilungen in einem Untergrund gelöst. In den abhängigen Vorrichtungsansprüchen sind eine Reihe von spezifischen Merkmalen aufgeführt, die im einzelnen anhand von Ausführungsbeispielen, die in der Zeichnung dargestellt sind, erläutert werden. In der Zeichnung zeigt

Fig. 1 ein erstes Ausführungsbeispiel der erfindungsgemäßen Vorrichtung mit zwei plattenförmigen Elektroden, die in einem vorgegebenen Abstand zueinander angeordnet sind, in einer schematischen Darstellung,

Fig. 2 ein zweites Ausführungsbeispiel einer erfindungsgemäßen Vorrichtung, bei der vier stabförmige Elektroden im Untergrund angeordnet sind, in einer schematischen Darstellung,

Fig. 3 ein drittes Ausführungsbeispiel einer erfindungsgemäßen Vorrichtung, bei der die Elektroden in Bohrlöchern angeordnet sind, in einer schematischen Darstellung, und zeigen

Fig. 4-7      weitere Ausführungsbeispiele mit unterschiedlichen Elektrodenanordnungen und -ausgestaltungen.

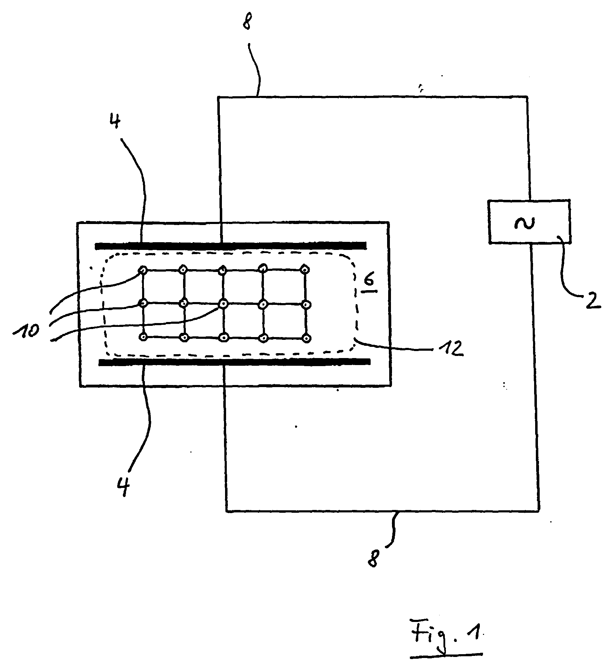

In Fig. 1 ist ein erstes Ausführungsbeispiel einer erfindungsgemäßen Vorrichtung dargestellt, die einen Generator 2 zum Erzeugen einer Wechselspannung, eine Elektrodenanordnung mit zwei Elektroden 4, die plattenförmig ausgebildet sind und mit einem Untergrund 6 in Kontakt stehen, und Zuleitungen 8 aufweist, die die Elektroden 4 mit dem Generator 2 verbinden und somit einen Stromkreis herstellen. Weiterhin weist die Vorrichtung eine Mehrzahl von Magnetfeldsensoren 10 zur Messung der Magnetfeldstärkeverteilung innerhalb eines Untersuchungsbereiches 12 auf, der in Fig. 1 mit einer gestrichelten Linie dargestellt ist.

Bei dem in Fig. 1 dargestellten Ausführungsbeispiel, das insbesondere für Laboranordnungen geeignet ist, sind die Elektroden so angeordnet, daß sie wie bei einem Platten-Kondensator ein homogenes elektrisches Feld erzeugen. Bei einer solchen Anordnung läßt sich erstens sehr einfach von den Magnetfeldern auf die Stromverteilung schließen, da die Stromfäden in guter Näherung senkrecht zu den Elektroden verlaufen und zweitens unmittelbar die Leitfähigkeitsverteilung abschätzen, da das elektrische Feld nahezu homogen ist. Mit numerischen Methoden können diese Abschätzungen noch verbessert werden.

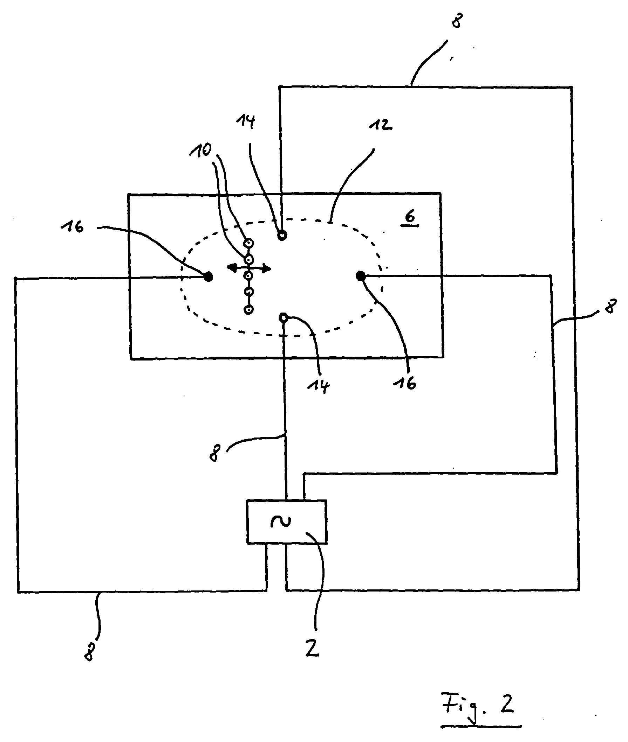

Bei dem in Fig. 2 dargestellten zweiten Ausführungsbeispiel, das insbesondere für eine Anordnung im freien Gelände geeignet ist, sind zwei Paare von stabförmigen Elektroden 14 bzw. 16 im Untergrund 6 angeordnet, so daß sich eine gekreuzte Elektrodenanordnung ergibt. Der von dem Generator 2 erzeugte Wechselstrom fließt bei zwei aufeinanderfolgenden Meßreihen einmal zwischen den Elektroden 14 und ein anderes Mal zwischen den Elektroden 16. Zusätzlich lassen sich die Elektroden 14 und 16 zu zwei unterschiedlichen Quadropolen zusammenschalten, woraus weitere unabhängige Informationen gewonnen werden können. Für jede Ausrichtung des zwischen den Elektroden 14 und/oder 16 fließenden Wechselstromes wird die Magnetfeldstärkeverteilung mit Hilfe der Magnetfeldsensoren 10 gemessen.

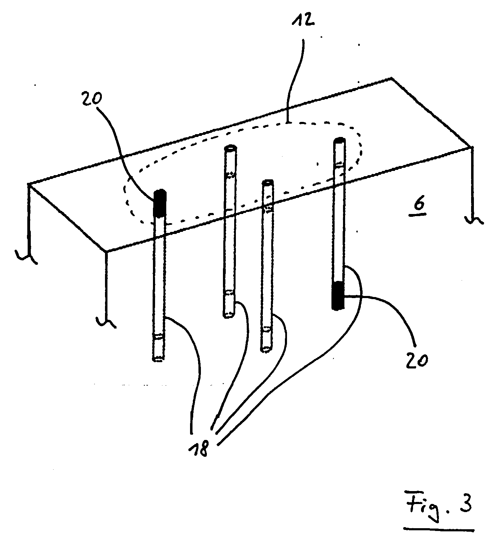

In Fig. 3 ist ein drittes Ausführungsbeispiel einer erfindungsgemäßen Vorrichtung dargestellt, wobei - in perspektivischer Darstellung - insgesamt vier Bohrlöcher 18 dargestellt sind, in denen jeweils Paare von Elektroden 20 angeordnet sind. Dadurch ist es möglich, den Hauptteil des fließenden Stromes durch den möglicherweise einige Meter unterhalb der Untergrundoberfläche befindlichen Grundwasserleiter fließen zu lassen. Daher kann die Stromeinleitung über Brunnen direkt in das Wasser erfolgen. Da das Wasser selbst eine um ein bis zwei Größenordnungen größere elektrische Leitfähigkeit besitzt, als der wassergesättigte Boden typischerweise aufweist, muß der gesamte wassergefüllte Bereich des Brunnens als Kurzschluß für den Strom angesehen werden.

Wird die Stromeinleitung in den Untergrund auf kurze Stücke in jeweils großer und geringer Tiefe begrenzt, wie in Fig. 3 dargestellt ist, läßt sich auch die vertikale Komponente der Stromfließrichtung variieren, so daß die Datenbasis der Meßwerte auch in dieser Richtung das Invertierungsproblem überbestimmt und eine vertikale Differenzierung der Leitfähigkeitsverteilung möglich wird. Erreichen läßt sich eine derartige Elektrodenanordnung, indem man die obere Elektrode an der nicht mit Grundwasser gesättigten Oberkante des Untergrundes anbringt und die untere Elektrode innerhalb eines Brunnens so positioniert, daß die Elektrode 20 nicht mit dem Wasser innerhalb des Brunnens in Kontakt steht, indem das Wasser oberhalb der Elektrode z. B. mit einem Packer herausgedrückt wird. Alternativ kann die Elektrode auch ohne Bohrung in den Untergrund gebracht (gerammt) werden, so daß sich oberhalb dieser kein wassergefüllter Hohlraum ausbildet.

Eine weitere Ausgestaltung dieser Vorrichtung, die nicht in der Zeichnung dargestellt ist, basiert darauf, daß sigmentiert aufgebaute Elektroden in den Untergrund eingebracht werden, wobei durch eine entsprechende Verschaltung der verschiedenen Elektrodenbereiche unterschiedliche Stromfließrichtungen realisiert werden können.

Weiterhin besteht auch die Möglichkeit, durch unterschiedliche Wahl der Geometrien der Elektrodenanordnungen den Fokus der durchgeführten Messung des Untersuchungsbereiches zu verändern. Da sich die Stromdichteverteilung entlang der elektrischen Feldlinien im Untersuchungsbereich ausbilden, ist in Bereichen hoher Feldliniendichte (Fokus) die Stromdichte besonders hoch und somit auch das hiervon ausgehende Magnetfeld. Dieses erhöht den Kontrast der Messung in diesen Bereichen hoher Stromdichte. Durch eine variable Gestaltung der Geometrieen der Elektrodenanordnungen können demnach verschiedene Bereiche des Untersuchungsbereiches detailliert untersucht werden.

Die verwendeten Magnetfeldsensoren 10 können in unterschiedlicher Weise ausgebildet sein. Im wesentlichen sind dabei zu nennen:

- SQUID (Superconducting Quantum Interference Device)
- Induktionspulenmagnetometer
- MR (Magneto Resistance)
- GMR (Giant Magneto Resistance)
- Optisch gepulste Magnetometer/Gradiometer
- Flux-Gate
- Proton-Präzessionsmagnetometer

Die MR/GMR Sensoren haben insbesondere den Vorteil, daß man sie zu großen Arrays zusammenfügen kann, wodurch der Meßvorgang wesentlich vereinfacht wird. Die Squids zeichnen sich vor allem durch ihre extrem hohe Empfindlichkeit aus, sind durch die erforderliche Kühlung allerdings schwer zu handhaben.

Bei einer in den Fign. 1 und 2 nicht dargestellten Ausführung wird ein einzelner Magnetfeldsensor 10 verwendet, um das magnetische Feld oberhalb des Untersuchungsbereiches abzutasten. Wie in Fig. 2 dargestellt ist, besteht auch die Möglichkeit, eine Mehrzahl von Magnetfeldsensoren 10 entlang einer Linie anzuordnen, so daß ein eindimensionales Array von Magnetfeldsensoren 10 erreicht wird. Ein solches eindimensionales Array läßt sich beispielsweise in Gestalt eines Stabes realisieren, entlang dessen die Magnetfeldsensoren 10 angeordnet sind und wobei die Magnetfeldsensoren 10 zusammen mit dem Stab über den Untersuchungsbereich hin- und herbewegt werden. Dieses ist in Fig. 2 mit dem Doppelpfeil angedeutet.

Weiterhin ist es auch möglich, wie in Fig. 1 dargestellt ist, ein zweidimensionales Array aus Magnetfeldsensoren 10 zu bilden, das beispielsweise als Netz ausgeführt ist. Dieses zweidimensionale Array von Magnetfeldsensoren 10 wird auf dem Untersuchungsbereich 12 ausgebreitet, so daß anschließend ohne Lageveränderung der Magnetfeldsensoren 10 die Magnetfeldstärkeverteilung oberhalb des Untersuchungsbereiches 12 mehrfach abgetastet werden kann. Das ist insbesondere dann von Vorteil, wenn man zeitabhängige Phänomene untersucht, indem eine Flüssigkeit mit einer erhöhten elektrischen Leitfähigkeit, wie beispielsweise eine Salzlösung, auf den Untergrund 6 aufgebracht wird und das zeitliche Verhalten gemessen und analysiert wird.

Für ein genaues Vermessen der Magnetfeldstärkeverteilung ist die genaue Positionierung und Kontrolle der Ausrichtung des Magnetfeldsensors 10 bzw. der Magnetfeldsensoren 10 erforderlich. Dabei kann in bevorzugter Weise der Sensor kardanisch aufgehängt sein und in Verbindung mit einer sich schnell drehenden Scheibe in einer Richtung fixiert werden. Zum anderen kann der Magnetfeldsensor 10 mit einem Sender ausgestattet sein, der von verschiedenen fest am Rand des Untersuchungsbereiches 12 installierten Empfängern angepeilt wird, so daß die Position des Magnetfeldsensors 10 immer bekannt ist. Die Anwendung weiterer, aus dem Stand der Technik bekannter Verfahren zur Positions- und Lagebestimmung können ebenso angewendet werden.

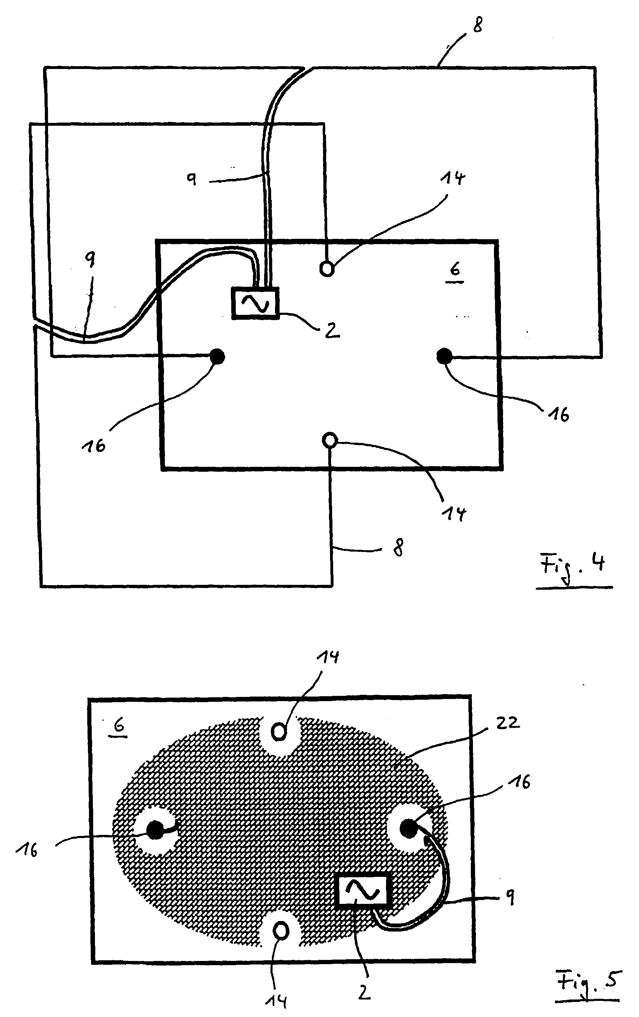

Wie in den Fign. 1 und 2 dargestellt ist, sind die Zuleitungen 8 in besonderer Weise von dem Untersuchungsbereich 12 weggeführt angeordnet. Dieses dient dazu, die von den in den Zuleitungen 8 fließenden Strömen erzeugten Magnetfelder zu kompensieren. Dazu werden die Zuleitungen 8 zu den Elektroden 4 bzw. 14 und 16 in Richtung des zu messenden Stromes vom Untersuchungsbereich 12 weggeführt und dann in rechten Winkeln in großem Abstand zu einem Stromkreis verbunden. Für eine derart kontrollierte Anordnung der Zuleitungen 8 ist eine rechnerische Kompensation der Magnetfelder nach der Messung möglich, wenn während der Messung der in den Zuleitungen 8 fließende Strom gemessen wird. Hierzu muß zudem die induktiv angeregte Magnetfeldantwort berücksichtigt werden. Dazu sind in bevorzugter Weise die Zuleitungen 8 zumindest teilweise als Koaxialkabel 9 ausgebildet, so daß die erzeugten Magnetfelder zumindest teilweise abgeschirmt werden. Dadurch läßt sich der Standort des Generators beliebig, auch innerhalb des Untersuchungsbereiches wählen, s. Fig. 4. Weiterhin ist auch eine Abschirmung aus μ-Metall möglich.

Ebenso ist eine magnetische Abschirmung der Zuleitungen 8 mittels eines Supraleiters möglich, jedoch wird dadurch der technische Aufwand insbesondere bei Freilanduntersuchungen vergrößert.

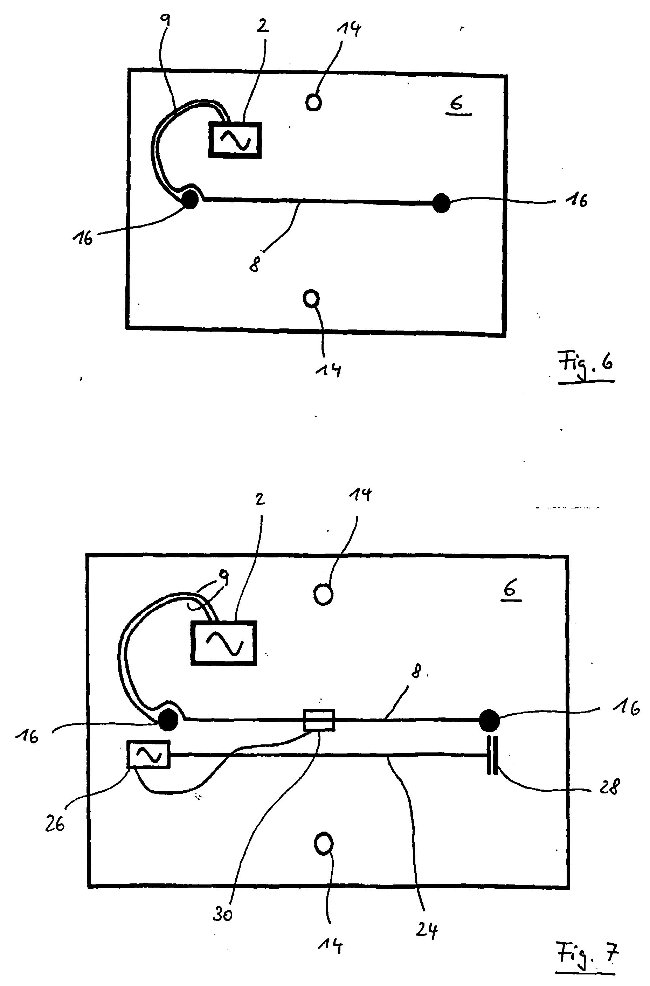

Weitere Ausgestaltungen der Zuleitungen sind in den Fign. 5 bis 7 dargestellt.

Fig. 5 zeigt ein Ausführungsbeispiel, bei dem die Zuleitung zu den Elektroden über Koaxialkabel 9 und ein Gitternetz 22 vorgenommen wird. Durch das Koaxialkabel 9 fließen gleiche Ströme in entgegengesetzter Richtung, so daß sich um das Kabel 9 die resultierenden Magnetfelder kompensieren. Beim Einsatz eines Gitternetzes 22 sind die Stromdichten durch die Zuleitung und dadurch die resultierenden Störfelder kleiner als bei einem einzelnen dünnen Leiter geringer. Außerdem läßt sich das Gitternetz 22 so auslegen, daß durch das Zuleitungsmagnetfeld die Feldverteilung eines ideal homogenen Untergrundes gerade kompensiert würde. Im realistischen Fall eines heterogenen Untergrundes werden also die Kontraste hervorgehoben. Statt eines Gitternetzes kann auch eine kaschierte Leiterplatte eingesetzt werden.

Fig. 6 zeigt ein Ausführungsbeispiel, bei dem die beiden Elektrodenströme zusammen über parallele Kabel oder ein Koaxialkabel 9 transportiert werden, so daß sich kein Störsignal ergibt. Daher ist es möglich, eine Elektrode 16 mit dem Generator 2 zu verbinden, ohne Störsignale zu erzeugen. Das Kabel muß aber anschließend über die Leitung 8 mit der zweiten Elektrode 16 verbunden werden, wobei hier nur eine Richtung ein Strom fließt, und damit ein störendes Magnetfeld erzeugt.

Bei dem in Fig. 7 dargestellten Ausführungsbeispiel wird auch dieses Magnetfeld kompensiert, indem parallel zur Zuleitung 8 eine weitere Leitung 24 verlegt wird, über die ein zweiter Generator 26 mit einem gegenphasigen Wechselstrom einen Kondensator 28 am Ort der zweiten Elektrode 18 auf- bzw. entlädt. Die resultierenden Felder der Zuleitungen 8 und 24 heben sich dadurch gegenseitig auf. Damit der Kompensationsstrom durch die Zuleitung 24 ständig mit entgegengesetzter Phase, aber gleicher Amplitude fließt wie durch Leitung 8, wird der Generator 26 über ein Strommeßgerät 30 mit dem Signal aus der Zuleitung 8 getriggert. Um eine möglichst vollständige Kompensation zu erreichen, werden die Zuleitungen 8 und 24 in einem Koaxialkabel zusammengefaßt.

Sind weiterhin die Magnetfeldsensoren 10 in einem zweidimensionalen Array netzartig angeordnet, so kann das Netz gleichzeitig zur Messung des Stromes, der das Netz an den jeweiligen Stellen durchfließt, verwendet werden. Dadurch wird eine sehr genaue Kompensation der Zuleitungsfelder möglich. An das zuvor beschriebene Netz läßt sich zudem eine Vorrichtung zur Messung des elektrischen Potentials, das durch den Stromfluß im Untergrund 6 an der Oberfläche des Untersuchungsbereiches 12 hervorgerufen wird, anbringen.

Bereits oben wurde darauf hingewiesen, daß das von dem zugeleiteten Wechselstrom im Untergrund hervorgerufene Magnetfeld zudem durch möglicherweise vorhandene ferromagnetische Materialien beeinflußt wird. Denn es können Suszeptibilitäten in der Größenordnung von $10^4$ in reinen Ferromagneten auftreten. Daher wird das magnetische Signal der Stromverteilung also von dem Magnetfeld lokalisierter Dipole überlagert, wenn ferromagnetische Materialien im Untergrund enthalten sind. Für eine Kompensation, bzw. eine Untersuchung, der lokalisierten ferromagnetischen Einlagerungen lassen sich im wesentlichen drei Konzepte angeben:

1. Induktive Anregung

Durch eine Leiterschleife, die auf dem Erdboden um das Untersuchungsgebiet gelegt wird, wird ein Magnetfeld in den Untergrund eingekoppelt, das von den ferromagnetischen Bereichen verstärkt wird. Die Magnetfeldverteilung wird in der gleichen Weise wie bei der eigentlichen Messung gemessen. Die Lock-In-Technik kann auch hier angewendet werden. Dabei sind niedrige Frequenzen im Bereich kleiner als 1 Hz zu wählen, um die Anregung von Wirbelströmen im Untergrund gering zu halten. Dadurch, daß praktisch keine Ströme fließen, wird auf diese Weise die Verteilung ferromagnetischer Bereiche im Untergrund bestimmt, die anschließend bei der Messung mit Wechselstrom herausgerechnet werden kann.

Bei der einfachsten Beschaltung (Zuleitungen zu den Stromeinleitungselektroden) auf dem Feld, ist durch die Zuleitungen bereits eine solche Leiterschleife gegeben (s. Fign. 1 und 2). In diesem Fall geht man so vor, daß mit zunächst oberirdisch kurzgeschlossenen Stromleitelektroden die induktive Messung durchgeführt wird, um danach die Strommessung durchzuführen.

2. Da es sich bei den ferromagnetischen Bereichen um induktive Leitfähigkeiten bzw. Widerstände handelt, bewirken diese eine frequenzabhängige Phasenverschiebung des Meßsignals an dieser Stelle. Die Frequenzabhängigkeit ist umgekehrt zu derjenigen des kapazitiv bedingten imaginären Widerstandes, so daß diese beiden möglichen Quellen von Phasenverschiebungen durch Frequenzvariation getrennt werden können (kapazitiver Widerstand sinkt mit der Frequenz: 1/iwc, induktiver Widerstand steigt mit der Frequenz iwL).

3. Eine dritte Möglichkeit der Kompensation erwächst aus der Tatsache, daß es sich bei den Einlagerungen im wesentlichen um lokalisierte Bereiche handelt, die entsprechend ein Dipolfeld mit kurzer Dipollänge erzeugen. Verglichen mit der durch den Stromfluß hervorgerufenen Feldverteilung ist also mit viel höheren Feldkrümmungen zu rechnen. Durch die rechnerische Anpassung von Dipolfeldern an entsprechende Bereiche der gemessenen Werte können die Einflüsse ferromagnetischer Bereiche dann aus dem Signal der Magnetfeldverteilung herausgerechnet werden, bevor die Inversion durchgeführt wird.

**Patentansprüche**

1.	Verfahren zur oberflächennahen Detektion von Stromdichteverteilungen in einem Untergrund,

-	bei dem mindestens zwei Elektroden von mindestens einer Elektrodenanordnung mit dem Untergrund in Kontakt gebracht werden,
-	bei dem über elektrische Zuleitungen eine elektrische Wechselspannung an den Elektroden angelegt wird,
-	bei dem sich im Untergrund aufgrund der Leitfähigkeitsverteilung eine Stromdichteverteilung ausbreitet,
-	bei dem die Magnetfeldstärkeverteilung, die durch die im Untergrund fließende Stromdichteverteilung erzeugt wird, mit Hilfe mindestens eines Magnetfeldsensors an einer Mehrzahl von Orten innerhalb eines Untersuchungsbereiches gemessen wird, und
-	bei dem die gemessene Magnetfeldstärkeverteilung mittels einer inversen Faltung mit dem Gesetz von Biot-Savart in eine Stromdichteverteilung umgerechnet wird.

2.	Verfahren nach Anspruch 1, bei dem aus der berechneten Stromdichteverteilung die Leitfähigkeitsverteilung im Untergrund berechnet wird.

3.	Verfahren nach Anspruch 2, bei dem die Leitfähigkeitsverteilung unter Zuhilfenahme einer angenommenen Verteilung des elektrischen Feldes im Untergrund berechnet wird.

4.	Verfahren nach Anspruch 3, bei dem während der Messung der Magnetfeldstärkeverteilung gleichzeitig die elektrische Potentialverteilung an der Oberfläche des Untergrundes gemessen wird.

**5.** Verfahren nach Anspruch 2, bei dem für mindestens zwei verschiedene Elektrodenanordnungen die Messung der Verteilung der Magnetfeldstärke durchgeführt wird, wobei die Hauptausrichtungen der Stromdichteverteilungen für jeweils zwei Elektrodenanordnungen unter einem vorgegebenen Winkel, vorzugsweise von 90°, zueinander verlaufen, und daß aus der berechneten Stromdichteverteilung direkt die Leitfähigkeitsverteilung berechnet wird.

**6.** Verfahren nach einem der Ansprüche 1 bis 5, bei dem die Magnetfeldstärke außerhalb des Untergrundes gemessen wird.

**7.** Verfahren nach Anspruch 6, bei dem die Magnetfeldstärke in verschiedenen Höhen oberhalb des Untergrundes gemessen wird.

**8.** Verfahren nach einem der Ansprüche 1 bis 7, bei dem die Magnetfeldstärkeverteilung innerhalb des Untergrundes, vorzugsweise in Bohrlöchern, gemessen wird.

**9.** Verfahren nach einem der Ansprüche 1 bis 8, bei dem als Untergrund eine Laboranordnung verwendet wird und die Magnetfeldstärkeverteilung über und/oder seitlich neben und/oder unterhalb der Laboranordnung gemessen wird.

**10.** Verfahren nach einem der Ansprüche 1 bis 8, bei dem als Untergrund ein zu überprüfender Werkstoff verwendet wird.

**11.** Verfahren nach einem der Ansprüche 1 bis 10, bei dem mittels Lock-In-Technik, die mit der Frequenz der Wechselspannung ausgeführt wird, die Magnetfeldstärke gemessen wird.

**12.** Verfahren nach Anspruch 11, bei dem die Messung der Magnetfeldstärke mit der Lock-In-Technik zu unterschiedlichen Frequenzen der angelegten Wechselspannung durchgeführt wird.

**13.** Verfahren nach einem der Ansprüche 1 bis 12, bei dem die durch den in den elektrischen Zuleitungen fließenden Strom hervorgerufenen Störfelder bestimmt und von den gemessenen Magnetfeldstärken abgezogen werden.

**14.** Verfahren nach einem der Ansprüche 1 bis 13, bei dem die durch ferromagnetische Elemente im Untergrund induzierten Störfelder bestimmt und von den gemessenen Magnetfeldstärken abgezogen werden.

**15.** Verfahren nach einem der Ansprüche 1 bis 14, bei dem mit Hilfe einer das Untersuchungsgebiet zumindest teilweise umfassenden Leiterschleife ein Magnetfeld im Untergrund induziert wird und bei dem bei verschiedenen Abständen der Leiterschleife und/oder des mindestens einen Magnetfeldsensors vom Untergrund das induzierte Antwortsignal gemessen wird.

**16.** Verfahren nach einem der Ansprüche 1 bis 14, bei dem eine Flüssigkeit mit erhöhter elektrischer Leitfähigkeit, insbesondere eine Salzlösung, dem Untergrund zugeführt wird.

**17.** Verfahren nach Anspruch 16, bei dem zu unterschiedlichen Zeitpunkten vor und/oder nach dem Einleiten des Flüssigkeit die Leitfähigkeitsverteilung im Untergrund bestimmt wird und die Differenzen der verschiedenen Leitfähigkeitsverteilungen berechnet werden.

**18.** Verfahren nach Anspruch 17, bei dem aus der Erhöhung der Leitfähigkeit die Konzentration eines Elektrolyten im Untergrund bestimmt wird.

**19.** Vorrichtung zur Durchführung des Verfahrens zur oberflächennahen Detektion von Stromdichteverteilungen in einem Untergrund, insbesondere nach einem der Ansprüche 1 bis 18,

- mit einem Generator (2) zum Erzeugen einer Wechselspannung,
- mit mindestens einer Elektrodenanordnung mit mindestens zwei Elektroden (4, 14, 16, 20), die mit einem Untergrund (6) in Kontakt stehen,
- mit Zuleitungen (8), die die Elektroden (4, 14, 16, 20) mit dem Generator (2) verbinden, und
- mit mindestens einem Magnetfeldsensor (10) zur Messung der Magnetfeldstärkeverteilung innerhalb eines Untersuchungsbereiches (12).

**20.** Vorrichtung nach Anspruch 19, dadurch gekennzeichnet, daß die Zuleitungen (8) zu den Elektroden (4, 14, 16, 20) in der Richtung des zu messenden Stromes vom Untersuchungsbereich (12) weggeführt und mit einem vorgegebenen Abstand zu dem Untersuchungsbereich (12) in vorgegebenen Winkeln, vorzugsweise in rechten Winkeln, zu einem Stromkreis mit dem Generator (2) verbunden sind.

**21.** Vorrichtung nach Anspruch 19 oder 20, dadurch gekennzeichnet, daß die Zuleitungen (8) zumindest teilweise als Koaxialkabel (9) ausgeführt sind.

**22.** Vorrichtung nach einem der Ansprüche 19 bis 21, dadurch gekennzeichnet, daß die Elektroden (14, 16) über ein Gitternett (22) oder eine kaschierte Leiterplatte mit den Zuleitungen (8, 9) verbunden sind.

**23.** Vorrichtung nach einem der Ansprüche 19 bis 22, dadurch gekennzeichnet, daß die Elektrodenanordnung zwei flächige, plattenförmige Elektroden (4) in einem vorgegebenen Abstand, vorzugsweise parallel zueinander ausgerichtet, aufweist.

**24.** Vorrichtung nach einem der Ansprüche 19 bis 22, dadurch gekennzeichnet, daß die Elektrodenanordnung zwei stabförmige Elektroden (14, 16) mit einem vorgegebenen Abstand aufweist.

**25.** Vorrichtung nach einem der Ansprüche 19 bis 22, dadurch gekennzeichnet, daß die Elektroden (20) in Bohrlöchern (18) in den Untergrund (6) eingebracht sind.

**26.** Vorrichtung nach Anspruch 25, dadurch gekennzeichnet, daß die Elektroden (20) in unterschiedlichen Höhen innerhalb der Bohrlöcher (18) mit dem Untergrund (6) in Kontakt stehen.

**27.** Vorrichtung nach einem der Ansprüche 19 bis 26, dadurch gekennzeichnet, daß ein einzelner Magnetfeldsensor (10) zu einer Mehrzahl von Meßstellen bewegbar angeordnet ist.

**28.** Vorrichtung nach einem der Ansprüche 19 bis 26, dadurch gekennzeichnet, daß eine Mehrzahl von Magnetfeldsensoren (10) entlang einer Linie angeordnet sind und die Magnetfeldstärke an einer Mehrzahl von Orten entlang einer Linie messen.

**29.** Vorrichtung nach einem der Ansprüche 19 bis 26, dadurch gekennzeichnet, daß eine Mehrzahl von Magnetfeldsensoren (10) entlang einer Fläche verteilt angeordnet sind und die Magnetfeldstärke an einer Mehrzahl von Orten auf der Fläche messen.

Fig. 1

Fig. 2

12

20

20

6

18

Fig. 3

Fig. 4

Fig. 5

Fig. 6

Fig. 7